# EUROPEAN PATENT APPLICATION

(11) **EP 2 535 563 A1**
(43) Date of publication of application: **19.12.2012**
(21) Application number: 11739333.0
(22) Date of filing: 31.01.2011
(51) Int. Cl.: F03D 3/04

(54) **HIGH-EFFICIENCY HIGH-POWER VERTICAL AXIS WIND GENERATOR**

(30) Priority: 08.02.2010 CN 201019114066
(71) Applicant: National Wind Energy Co. Ltd., Pinggu District, Beijing 101206 (CN)
(72) Inventor: JIANG, Dalong, Beijing 101206 (CN); XU, Jinquan, Beijing 101206 (CN); WANG, Jianhui, Beijing 101206 (CN)
(74) Representative: Walder, Jeremy Thomas
(86) International application number: PCT/CN2011/000174
(87) International publication number: WO 2011/095054

(57) **Abstract**

A high-efficiency and high-power vertical axis wind turbine provided by the present invention includes a rotor with vertical blades as well as a booster airfoil, the said booster airfoil is a wind shielding object which is provided on a support in a manner without blocking the rotation of the said blade and in the front of the windward side of the said wind rotor, the wind shielding surface of the said booster airfoil corresponds with the windward blades of the said wind rotor on the side where rotation is hindered by the incoming wind streams, so that the side where rotation of the rotor is hindered by the incoming wind streams is shielded, and the said support is placed on a fixed frame. The provision of a booster airfoil in front of the windward side of the rotor helps block the moment of resistance produced by the air stream on the rotor of the wind turbine, adding to the moment of rotation of the rotor, improving the efficiency of the wind turbine possibly by 25% or more.

## Description

### Technical field

The present invention relates to the wind turbine technical field, which provides a wind turbine and in particular a high-efficiency high-power vertical axis wind turbine.

### Background art

Wind energy is a renewable energy having the broadest application prospect next to hydraulic energy, which has received a great attention from the various nations of the world. China has become the most active wind energy market in the world. In 2009, China's newly added installed capacity of wind turbines exceeded 8 million kW, with the total accumulative capacity amounting to 20 million kW or more. Thus, the wind power generation equipment manufacturing industry and the relevant field have a quite broad market prospect in China

Per the direction of revolution axis, wind turbine can be divided into two types, namely, horizontal axis and vertical axis.

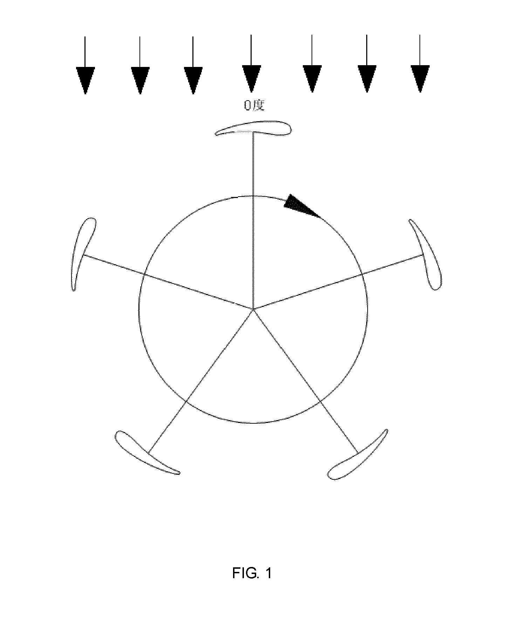

In prior art, vertical axis wind turbines are increasingly demonstrating their characteristics of high efficiency, high power and easy installation and use as well as long service life, etc.. However, when the vertically arranged rotor turns as a result of wind drive, the rotating speed of the rotor is not increasing in proportion to the increase of wind power, which is even more so when the wind power is not as high. The reason to this is that, as shown in Fig. 1, when the incoming wind streams (indicated by the several arrows in parallel shown in Fig. 1) impact the rotor, the windward side of the rotor receives an effective pushing force driving the rotor to turn, while the other side receives a resistance deterring the rotor from turning, and the resultant force from the above two forces is the effective power with which the incoming wind streams cause the rotor to turn and do work. Since the existence of wind resistance on the windward side dramatically reduces the driving force obtained by the vertical axis rotor from the incoming wind, the efficiency of the turbo-generator decreases accordingly.

The solution to this problem in the existing technology is to provide a flow guiding device on the windward side of the rotor to form a flow-guiding wind field, which makes the incoming wind to flow through the channel provided by the guiding device before blowing at the rotor and pushing the rotor to turn. This method of wind resistance elimination through introducing the natural wind into the flow guiding channel and then pushing the rotor blades has the demerit of reducing the power of the natural wind. Furthermore, direction of the natural wind is subject to frequent change, under which circumstance, if the flow-guiding device does not change its flow-guiding direction along with the wind direction, the wind energy loss brought about by the flow-guiding device will be much higher. However, if the flow guiding device is designed to change its flow guiding direction as the wind direction changes, it is inevitable that the structure of the flow-guiding device will become more complex. This may bring about inconvenience for the use, management and maintenance in such a special harsh environment like the wind farm.

The rotor blades of the existing wind turbines are mostly of triangle shape with one end being bigger than the other end and the smaller end being slender, such slender blades are susceptible to deformation and generation of resonance vibration when wind power is high, can also be easily broken under the action of wind pressure, thus, such rotors have such shortcomings as poor wind resistance, the generation of resonance vibration when rotating, low power and high breakage probability, etc. and due to the aforesaid problems existing with such rotor blades, and further because of the present wind turbine development toward larger scale and larger power rating, the blade breakage probability will be higher with the increasing of rotor diameter, and their service life will be shorter, which brings about a negative impact on the development wind power generation cause.

### Description of the present invention

The topmost purpose of the present invention is to improve the deficiency of the wind turbine rotor in the prior art that under the action of wind power, the generated resistance hinders the rotation of the rotor, keeping the turbine power and efficiency at a low level, and in particular, it provides a high-efficiency high-power vertical axis wind turbine with booster airfoil that is completely different from the existing principle of building guiding wind field and is capable of minimizing the resistance preventing the rotor from rotating, thus, improving the rotating efficiency of the rotor;

Another purpose of the present invention is to provide a high-efficiency and high-power vertical axis wind turbine complete with rotor blades characterized by high strength and rigidity, light weight and low resistance;

The purposes of the present invention are fulfilled as follows:

A high-efficiency and high-power vertical axis wind turbine comprising a wind rotor that can be revolveably connected on a center pylon, the said wind rotor is provided with a number of blades and the power generator unit is provided between the rotor and the pylon, the stator assembly of the power generator unit is circularly placed on the pylon while the rotor assembly is placed at the periphery of the said stator assembly and fixed with the wind rotor hub;

Also included is a booster airfoil which is a wind shielding object and is placed on a support without blocking the rotation of the said blades, and in the front of the windward side of the said wind rotor, the wind shielding surface of the said booster airfoil corresponds with the windward blades of the said wind rotor on the side where rotation is hindered by the incoming wind streams, so that the side where rotation of the rotor is hindered by the incoming wind streams is shielded, and the said support is placed on a fixed frame.

According to the present invention, a concept completely different from the prior art is adopted to solve the problem of reduced wind turbine efficiency due to the increased moment of resistance of the wind rotor resulted from the incoming wind streams, ie., by applying the principle of wind field cutoff, where the air streams adding to the moment of resistance to the wind rotor are blocked by the wind shielding object provided, preventing it from acting on the relevant blades of the wind rotor. Through the interception of such wind shield, the energy output of the wind turbine can be increased, and the wind shield is thus called booster airfoil.

The said booster airfoil is a plate type booster airfoil comprising a plate element fixed on the said support, and the side surface of this plate element corresponds with the windward side of the rotor of the said wind turbine to form the said wind shielding face; or,

The said booster airfoil is a wind rotor type booster airfoil comprising at least one rotor which can be revolveably connected on a wind rotor axis, the said wind rotor axis is fixed on the said support, and the cylindrical locus resulted from the outermost rotation of the blades on the rotor of the said booster airfoil forms the said wind shielding face.

The wind rotor of the present vertical axis wind turbine is a rotor with vertical blades, where the blades are connected onto the hub in the wind rotor by using two or more knightheads, and at least one of the said hubs is connected with the rotor of the wind turbine while the other hubs are revolveably connected with the said center pylon; this blade is a vertical cylindrical object whose horizontal cross-section is of the section form of an airplane wing, ie., with respect to the rotor revolution axis, its outer side surface o and the windward end face form a smooth transitional streamline cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.

The said wind rotor of the said booster airfoil may also be identical to the wind rotor of the wind turbine, ie., rotor with vertical blades, where the blades are connected onto the hub inside the rotor via knighthead, and the said hub can be revolveably fixed on the revolution axis of the said rotor installed in parallel with the said pylon, and the blade takes the form of a vertical cylindrical object, whose horizontal cross-section is of the section form of an airplane wing, ie., with respect to the rotor revolution axis, its outer side surface o and the windward end face form a smooth transitional streamline cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.

Rotor of the said booster airfoil may also be a propeller type rotor or a rotor of any other form.

The rotor type booster airfoil rotates under the action of the incoming wind streams which may have the same function as the plate type booster airfoil, ie., the function of blocking the air streams from acting on the rotor of the wind turbine to produce moment of rotational resistance.

The said rotor type booster airfoil may have one rotor; or several rotors, all of which are provided on the revolution axis of the said wind rotor.

In case the said booster airfoil has one rotor, the height of the blade on the said rotor is identical to the height of the said blade on the rotor of the said wind turbine; or when there are several of the said rotors, the sum of the height of the blades on the various rotors and the gap in the vertical direction between the neighboring rotor blades equals to the height of the said blades on the rotors of the said wind turbine.

Furthermore, a power generator set is provided between the rotor of the said booster airfoil and the said rotor axis, with the said rotor to be connected with the rotor of the said generator set to form a complete wind power generator set.

Between the said rotor and the said rotor axis in the small rotor assembly formed by the rotor and rotor axis provided in the said booster airfoil may be provided light-duty power generator set. The structural style of the light-duty generator unit provided on the booster airfoil may be basically identical to that of heavy-duty vertical axis wind turbine, or may be different but the power generation components in a conventional wind turbine.

The said wind shielding face of the said booster airfoil is a flat surface or cambered surface or a combination of flat surface and cambered surface; and/or,

The edge of the outermost side of the said wind shielding surface of the said booster airfoil away from the center pylon of the said rotor provided in the said vertical axis wind turbine should at least correspond with the outermost side of the said side surface of the windward side of the rotor in the said vertical axis wind turbine; and/or,

Width of the said wind shielding surface of the booster airfoil is 1/3 or 1/2 of the entire windward side surface of the rotor in the said wind turbine; and/or,

The edge of the said wind shielding surface of the said booster airfoil near the side of the center pylon of the said rotor provided in the said vertical axis wind turbine is on the corresponding windward side after turning 180 degrees to 330 degrees in clockwise direction starting from the center point of the said windward side surface and with the said center pylon at the center; and/or,

The said wind shielding surface of the said booster airfoil is a cambered surface and the two ends of the cambered surface are as follows:

To correspond with the depression angle of the rotor in the said vertical axis wind turbine, the two ends of the wind shielding surface of the said booster airfoil is placed in the second quadrant with the center of the said rotor as the origin of coordinate or within the range extending from the second quadrant to the third quadrant.

Such kind of booster airfoil can ensure that basically no moment of resistance unfavorable for the rotation and power generation of the rotor is produced.

The said booster airfoil can be placed on the said center pylon, in particular, the said support includes two knightheads, and one ends of which are respectively connected with the upper and lower ends of the said booster airfoil while the other ends are connected on the center pylon of the said fixed frame, and these two knightheads are respectively located above and below the said rotor of the said wind turbine, and their lengths are so designed that the said booster airfoil is located outside the rotating peripheral locus of the said rotor blade, preventing it from affecting the movement of the rotor of the present vertical axis wind turbine.

The said booster airfoil may also be placed on other bearers. For instance, the said support may be paced on a foundation near the rotor of the said vertical axis wind turbine, keeping the said booster airfoil away from the rotating peripheral locus of the said rotor blade.

In the case of a plate type booster airfoil, the upper and lower ends of the plate are respectively fixed on two knightheads.

In the case of a rotor type booster airfoil, the upper and lower ends of the rotor axis are respectively fixed on two knightheads.

The said support is also placed on a foundation near the rotor of the said vertical axis wind turbine.

The direction of the wind blowing toward the rotor of the present wind turbine generally varies, and the orientation of the booster airfoil should also change as the windward side of the rotor varies. In addition, sometime the booster airfoil is not needed for air shielding, then it is necessary to move the booster airfoil from the windward side to the leeward side or downstream side, and to address this need, it is better to design the said support into a movable structure. In particular, the said knighthead may be revolveably and orientably fixed on the said center pylon.

And in the case of the said foundation on which the support is placed, track may be placed on the said foundation, and the said support is movably placed on the track for orientation.

Also included is a booster airfoil displacement mechanism comprising a drive unit, and the said drive unit is placed on the said fixed frame that is connected with the said support, enabling the support to displace and further enabling the wind shielding surface of the said booster airfoil placed on it to block the different sides of the said rotor.

A blade in the rotor of the said wind turbine includes a skeleton forming the shape of the blade as well as a skin fixed outside the said skeleton, and the said skeleton comprises blade skeletons, skeleton reinforcements and leaf-shaped knightheads;

There are several blade skeletons, which are frames in a horizontal section form of an airplane wing for the cylindrical objects of the blades, and are in aligned arrangement at a set spacing in the direction perpendicular with the blades;

The said skeleton reinforcement comprises a number of straight lever elements, and each skeleton reinforcement wraps around a number of the said blade skeleton frames in aligned arrangement, and each of the said skeleton reinforcement has an intersecting point of fixation with the frame of all blade skeletons in a vertical direction, which form a side wall skeleton of the blades to support and/or fix the said skin;

Two ends of the said leaf-shaped knighthead are supported and fixed on the lever body on the frame formed by the said blade skeleton in an opposite position so as to support and retain the shape of the frame.

The said skeleton reinforcement comprises four skeleton main ribs and a number of skeleton auxiliary ribs, and the said skeleton main ribs are distributed in such a manner: two of the said skeleton main ribs are placed on the side of the outer side surface of the corresponding blade while the other two skeleton main ribs are placed on the side of the inner side surface of the corresponding blade, the said four skeleton main ribs form a rectangle in the horizontal cross-section of the said blade, and are placed around the vertically provided lower mass center of the said blade and in such a manner that the mass of the said blade is balanced by the four skeleton main ribs.

The said skeleton main ribs are lever elements with a high strength and/or rigidity while the said skeleton auxiliary ribs are lever elements with a relatively low strength and/or rigidity; and/or,

The connecting points between the said skeleton main ribs and auxiliary ribs and the said blade skeleton intersect with and are fixed at the intersecting points between the said leaf-shaped knighthead and the said blade skeleton.

The connecting points between the said skeleton main ribs and auxiliary ribs and the said blade skeleton intersect with the connecting points between the leaf-shaped knighthead and the said blade skeleton.

With reference to the vertical axis of the revolution axis of the said rotor, the streamlined outer side surface of the said blade is placed along the circumference of the circle with a set radius; or, with reference to the vertical axis of the revolution axis of the said rotor, the streamlined outer side surface of the said blade is placed along a direction at a set angle with the tangential direction of the periphery of a circle with a set radius.

The rotor of the vertical axis wind turbine complete with a booster airfoil provided by the present invention, wherein a booster airfoil is provided in front of the windward side of the rotor for blocking the air streams from acting on the rotor of the wind turbine to produce moment of resistance, can increase the moment of rotation, thus, improving the efficiency of the wind turbine. Through the provision of the said booster airfoil, the efficiency of a wind turbine can increase by more than 25%. The blades in this wind turbine, whose basic form comes from an airplane wing, and through the formation of vertical cylindrical skeleton and skin structure, in particular the special structural configuration of the blade skeleton, blade knighthead and the skeleton main and auxiliary ribs inside the skeleton as well as the fabrication by using lightweight materials, the blades provided by the present invention is characterized by light weight, high strength and rigidity, simple combination and processing, high profiling accuracy, high wind resistance and high efficiency.

### A brief description of drawings

Fig. 1 is a schematic illustrating a windward rotor of a wind turbine in the prior art;
Fig. 2 is a diagram showing the relation between power and wind velocity of the existing wind turbine;
Fig. 3 is a schematic showing structure of the rotor of the vertical axis wind turbine complete with a plate type booster airfoil provided by the present invention;
Fig. 3a is a structural schematic showing the positional relation between the booster airfoil plate and the rotor of the wind turbine;
Fig. 4 illustrates the ration between the power and wind velocity of the present wind turbine complete with a booster airfoil;
Fig. 5 is a front structural schematic view of the rotor of the vertical axis wind turbine complete with a rotor type booster airfoil provided by the present invention;
Fig. 6 is a top structural schematic view of Fig. 5;
Fig. 7 is a front structural schematic view of the vertical axis wind turbine complete with a booster airfoil composed of multiple rotors;
Fig. 8 is a 3-dimensional schematic diagram showing the blades in the rotor of the vertical axis wind turbine provided by the present invention;
Fig. 9 top structural schematic view showing a structure of the rotor in the vertical axis wind turbine installed with the blades as shown in Fig. 1;
Fig. 10 is a front structural schematic view of the rotor as shown in Fig. 9;
Fig. 11 is a front structural schematic view of the displacement mechanism for the booster airfoil of the vertical axis wind turbine provided by the present invention as well as the rotor type booster airfoil connected on it;
Fig. 12 is a structural schematic top view of Fig. 1.

### Detailed description of the preferred embodiments

A high-efficiency and high-power vertical axis wind turbine provided by the present invention comprising a vertical blade rotor, which is revolveably fixed on a center pylon, and a number of blades are provided on the said rotor, a power generator set is provided between the said rotor and the pylon, the stator assembly of the power generator unit is circularly placed on the pylon while the rotor assembly is placed at the periphery of the said stator assembly and fixed with the wind rotor hub;

Also included is a booster airfoil which is a wind shielding object and is placed on a support without blocking the rotation of the said blades, and in the front of the windward side of the said wind rotor, the wind shielding surface of the said booster airfoil corresponds with the windward blades of the said wind rotor on the side where rotation is hindered by the incoming wind streams, so that the side where rotation of the rotor is hindered by the incoming wind streams is shielded, and the said support is placed on a fixed frame.

According to the present invention, a concept of wind field cutoff is applied to solve the problem of reduced wind turbine efficiency due to the increased moment of resistance of the wind rotor resulted from the incoming wind streams, where the air streams adding to the moment of resistance to the wind rotor are blocked by the wind shielding object provided, preventing it from acting on the relevant blades of the wind rotor. Through the interception of such wind shield, the energy output of the wind turbine can be increased, and the wind shield is thus called booster airfoil.

In a preferred embodiment of the said support comprising two knightheads, one ends of the two knightheads are respectively connected with the upper and lower ends of the said booster airfoil while the other ends are connected on the said center pylon, and these two knightheads are respectively located above and below the said rotor of the said wind turbine.

The said booster airfoil may be a plate type booster airfoil comprising a plate element such as a flat plate which is fixed on the said support, for instance, the upper and lower ends of the said plat plate are fixed on the two knightheads and the side surface of the said plate element corresponds with the windward side of the rotor of the said wind turbine to form the said wind shielding surface.

The said booster airfoil may also be a rotor type booster airfoil comprising a rotor, for example, a rotor with vertical blades, which is revolveably provided on a rotor axis, and the said rotor axis is fixed on the said support, for instance, the upper and lower ends of the rotor axis are fixed on two of the said knightheads. The cylindrical locus formed as a result of the rotation of the outermost side of the blade on the booster airfoil rotor forms the said wind shielding surface.

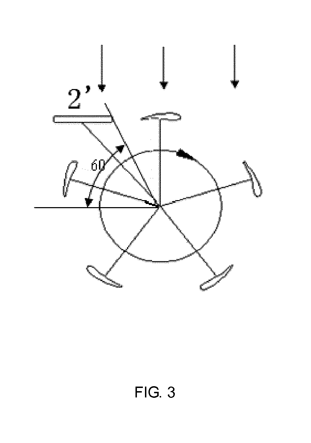

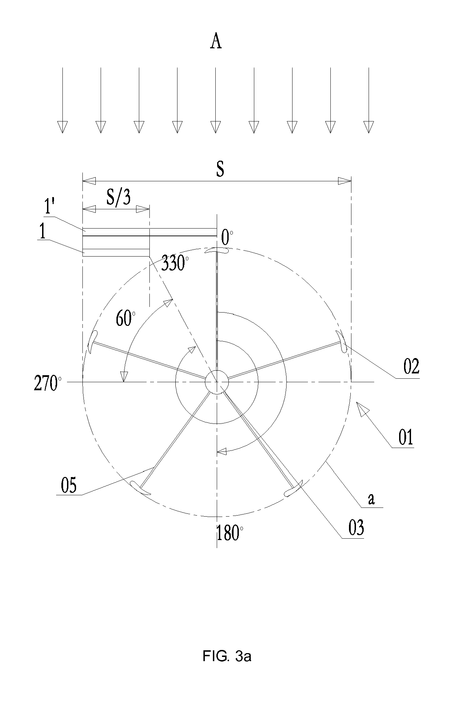

In particular, as shown in Fig. 3a, a vertical axis wind turbine complete with a plate type booster airfoil comprising a rotor 01 with vertical blades, blade 02 on the said vertical blade rotor 01 is connected onto the rotor hub by means of at least two knightheads 05, and the hubs connected by at least one knighthead are connected with the rotor in the power generator unit while rotor hubs that are not connected with the power generator unit are revolveably placed on pylon 03. Meanwhile, the stator corresponding with the rotor of the power generator is also fixed on pylon 03. This blade is a vertical cylindrical object whose horizontal cross-section is of the section form of an airplane wing, ie., with respect to the rotor revolution axis, its outer side surface and the windward end face form a smooth transitional streamline cambered surface, and the spacing of the windward surfaces of the blade is relative big, which gradually reduces along the leeward direction, and the various horizontal cross-sections of said cylindrical object are the same in size and form in vertical direction.

The blade 02 on the said vertical blade rotor 01 is connected on to the rotor hub by means of at least two knightheads 05, and the hubs connected by at least one knighthead are connected with the rotor in the power generator unit while rotor hubs that are not connected with the power generator unit are revolveably placed on pylon 9. Meanwhile, the stator corresponding with the rotor of the power generator is also fixed on pylon 9.

Also included is a booster airfoil which is a flat plate 1, whose upper and lower ends are respectively fixed at one end of the upper and lower knightheads (not shown in the figure), while other ends of these two knightheads are fixed on the said center pylon 03, and these two knightheads are respectively located above and below the said vertical blade rotor; Flat plate 1 of the booster airfoil is located outside the rotating peripheral locus a of the said rotor blade. Booster airfoil provided in such a manner would not affect the rotation of rotor 01 of the wind turbine, and the booster airfoil is located in front of the windward surface of the rotor, the surface of the flat plate corresponds with the windward blades on the side where the rotational resistance is received from the incoming wind streams, which blocks the windward side of the said rotor, allowing the side of the vertical rotor of the wind turbine where rotational resistance is received as a result of the incoming wind streams A is blocked.

One end of the flat plate 1 of the said booster airfoil away from the said center pylon is located outside the outermost end on the said side where the vertical blade rotor of the said wind turbine is shielded, which at least corresponds with the outermost end. The preferred width of the flat plate shall at least be 1/3 to 1/2 of the width S of the entire windward surface of rotor 01, and in the case of the flat plate 1 as shown in Fig. 3a, its width is 1/2 of the width S of the windward surface.

The said booster airfoil may also be an arc form or a combination of plane and cambered surface in form; the one side of the said flat plate near the said center pylon 03 is between 180° and 330° of the windward surface, or, corresponds with the depression angle of the said rotor 01, and the two ends of the cambered surface of the said booster airfoil are placed in the second quadrant with the rotor center as the origin of coordinate system or within the range extending from the second quadrant to the third quadrant.

For example, the one end of flat plate 1 or 2' as shown in Figs. 3 and 3a near the center pylon is in the 330° position within the center of the windward surface (0°) as the starting point, or the width of flat plate 1 blocks 1/3 of the windward surface of the rotor on one side or the central angle in correspondence with the windward surface is 60°, or the one section of flat plate 1 near the center pylon is in the 320° position with the center point of the windward surface (0°) as the starting point. Such booster airfoil may ensure that no moment of resistance unfavorable for rotation and power generation is produced by the rotor.

Furthermore, the relation between the two side edges of the arc plate type or plane and cambered surface combined plate type booster airfoil and the coordinate system of the rotor pylon center may be as such: With reference to the depression angle of the rotor in the said vertical axis wind turbine, the two ends of the wind shielding surface of the said booster airfoil are placed in the second quadrant with the center of the said rotor as the origin of coordinate system or within the range extending from the second quadrant to the third quadrant, which means, the booster airfoil is an arc plate in the second quadrant, and the said arc plate may also extend to the third quadrant. Of the windward surface of the rotor in correspondence with the second quadrant, at least a part of it from the outermost end inward is the said side surface that can produce moment of resistance to the blades in correspondence with the rotor. One end of the said booster airfoil may also further extend a section toward the third quadrant after reaching the outer end of the second quadrant. The booster airfoil at this point can be a curved wind shielding surface or a wind shielding surface of a combination of plane and cambered surface.

The flat plate of the booster airfoil may also be a bit wider, for example, the flat plate 1' as shown in Fig. 3, which shields 1/2 of the windward surface of the rotor, or a section of flat plate 1' near the center pylon is at the center point (0°) of the windward surface.

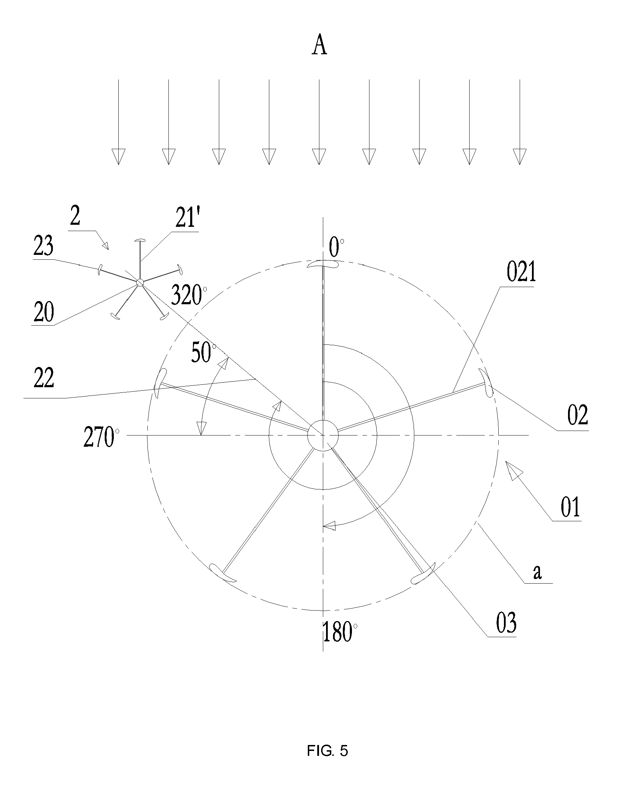

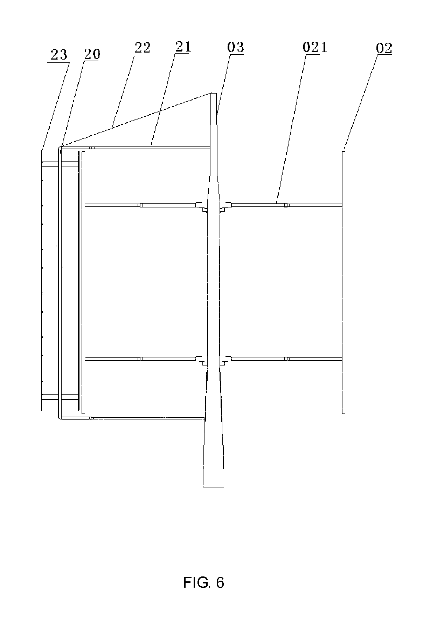

In another embodiment as shown in Figs. 5 and 6, where the booster airfoil is rotor 2, and the rotor of the vertical axis wind turbine complete with a rotor type booster airfoil comprises a vertical blade rotor 01, which is revolveably fixed on a center pylon 03, and on which a number of blades 02 are provided by means of knightheads 021, and the vertical rotor type booster airfoil 2 rotates under the action of incoming wind stream A, which may function to block the air stream from acting on the rotor of the wind turbine to produce moment of resistance just as a flat plate type booster airfoil do. The structure of the rotor of the booster airfoil may also be identical to the structure and form of the said rotor 01 in the said wind turbine, ie., the blade 23 therein is connected onto the hub in the rotor via a knighthead 21' , and this hub is revolveably fixed on the rotor axis 20, whose upper and lower ends are respectively connected with the center pylon 03 via two knightheads 21, and this can be a revolveable and fixed connecting structure enabling the rotor of the booster airfoil to adjust its positional relation with the rotor of the wind turbine according to the wind direction and needs. It is also possible to connect a diagonal drawbar 22 between the top of the center pylon and the upper end of rotor axis of rotor 2 of the booster airfoil in order to stabilize the connected between the booster airfoil and the pylon. The blade of such booster airfoil rotor is in the form of a vertical cylindrical object, and its horizontal cross-section is in the sectional form of an airplane wing, ie., with reference to the rotor axis, its outer side surface and windward end face are smoothly transitional streamlined cambered surface, and the distance between the inner side surface and inner side surface is as such that the distance on the windward surface of the blade is relatively bigger, which gradually reduces along the leeward direction, and in vertical direction, the various horizontal cross-sections of this cylindrical object have the same size and form. The height of the blades on the said booster airfoil rotor is comparable to that of the blades of the rotor of the said wind turbine. Further, a light-duty power generation unit can be provided between the said booster airfoil rotor 2 and the rotor axis 20. The structural form of the said light-duty power generation unit is basically similar to that of the heavy-duty vertical axis wind turbine with the stator provided on the rotor axis, rotor provided at the periphery of the stator and the blades are fixed on the circumferential surface of the rotor by means of knighthead 21' . Such booster airfoil can not only function to block the air stream from acting on the rotor of the wind turbine to produce moment of resistance, improving the power and efficiency of the wind turbine, but also generate additional electric energy, which can be combined with the electric power generated by the wind turbo-generator and sent to the power grid, thus, further improving the power of the wind turbo-generator, or this part of the electric energy can be accumulated by connecting it with a storage device and used for other applications of the present wind turbine.

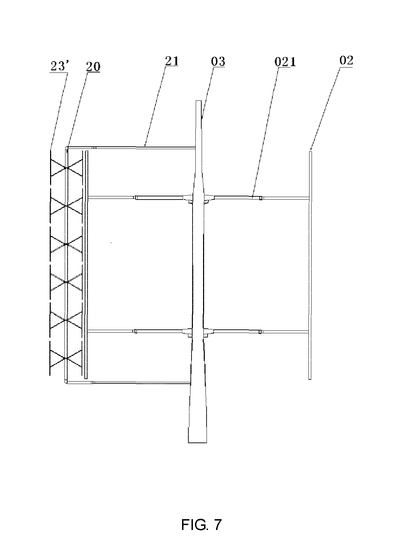

There may be a number of the said rotors of the said booster airfoil, as shown in Fig. 7, each vertical rotor 23' is connected on the said rotor axis 20. Longitudinally fixed on the said rotor axis, the height of the blades on the various rotors and the sum of the clearances in vertical direction of the neighboring rotor blades are comparable to the height of the blades of the said vertical blade rotor. At this point, a number of rotors may be the ones identical to the structure of the booster airfoil rotors as shown in Figs. 5 and 6, or may be rotors of any other type, for example, propeller type rotors.

At this point, the number of blades on the corresponding rotor may be five, which are equally distributed on the circumference of the rotor axis. The number of blades may also be 8 or 12. The number of blades of the rotor 01 of the present vertical axis wind turbine may be 2-24. If the number of blades is too few, the utilization ratio of the wind field is too low, keeping the power of the wind turbine at a low level. If the number of blades is too many, the centrifugal force is too big, which can easily lead to such accident as blade coming off and flying out.

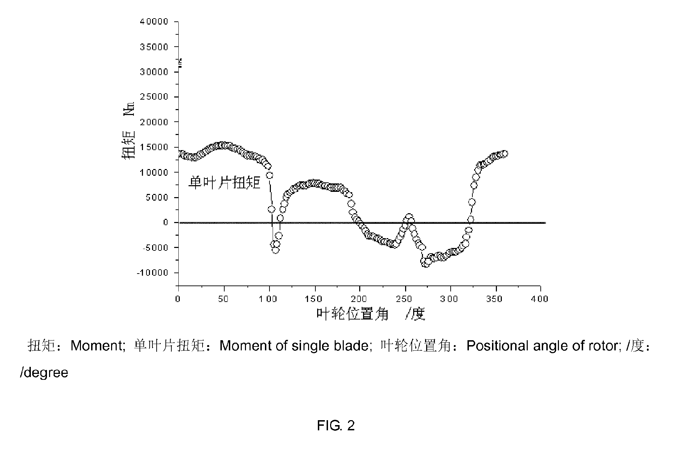

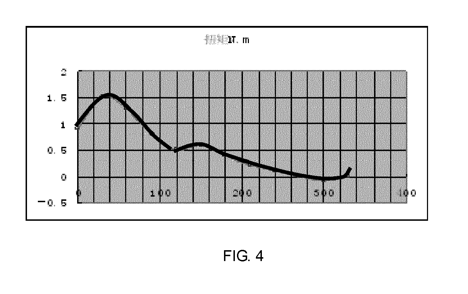

By putting a booster airfoil in front of the rotor of the wind turbine, the improvement of the power generating capacity and efficiency of the wind turbine is obvious, as shown in Fig. 2 and Fig. 4, the horizontal ordinate represents the position angle of the blade which is in "degree" , while the longitudinal coordinate represents the value of effective driving moment obtained by the blade from the wind stream. Fig. 2 shows a rotor of wind turbine without the present booster airfoil, and of the torque of a single blade in the rotor within 1 turn, the effective driving moments with a negative value below 0 accounts for about 25%. Fig. 4 is a torque diagram of a wind turbine complete with the booster airfoil, and it can be seen that the curve is always above 0. From this it can be clearly seen that when in place, the booster airfoil may help increase the power by 20% ∼ 25% or so, and the minimum wind velocity required for rotor starting can also be obviously reduced, enabling the wind turbine provided with the present booster airfoil to generate electric power at a low wind velocity

The support for supporting the said booster airfoil may be the aforementioned knighthead structure that is revolveable around the center pylon. It is possible to provide a driving mechanism on the said pylon, which connects the said knighthead and the booster airfoil is driven by the said driving mechanism to rotate around the pylon, thus, revolving it from the windward side of the rotor to the leeward side through adjusting the relative position between the booster airfoil and the rotor according to the wind direction, or when the wind velocity is fairly high and the booster airfoil is not required.

The support for the flat plate or rotor of the booster airfoil may also be the support placed on the foundation near the wind turbine. To enable the booster airfoil to adjust its position, a track may be provided on the foundation, for example, an annular track, and the support may move in the said track.

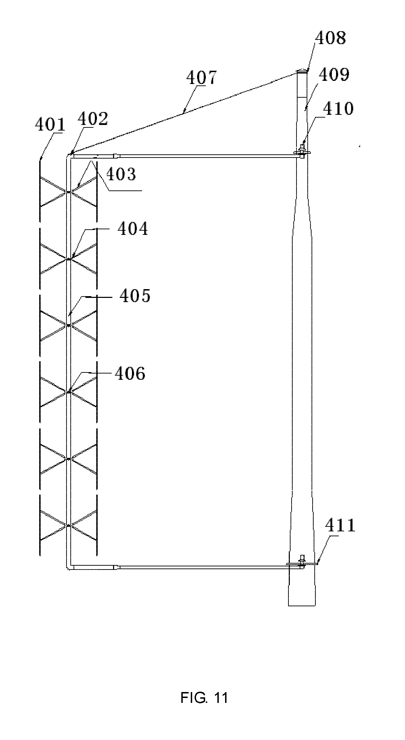

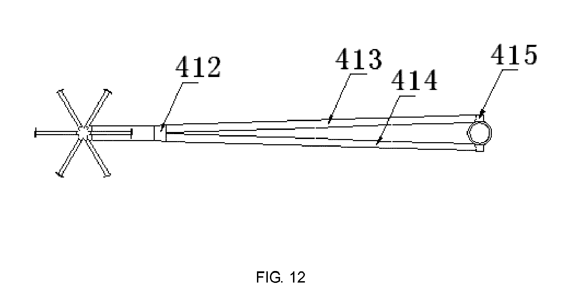

As shown in Figs 11 and 12, also included is a displacement mechanism for a booster airfoil comprising a drive unit, and the said drive unit is placed on the said fixed frame, and since it is connected with the said support, the displacement of the said support makes the wind shielding surface of the said booster airfoil installed on it to block different sides of the said rotor.

In particular as shown in Figs. 11 and 12, the upper and lower ends of the rotor axis 405 of the rotor 401 of the booster airfoil are respectively fixed on one end of the upper and lower knightheads, and the other ends of these two knightheads are revolveably fixed on the center pylon 409, and the said two knightheads are respectively located above and below the said vertical rotor blade, and the said booster airfoil is a wind shielding object located outside the rotating circumferential locus a of the said rotor blade, preventing it from affecting the rotation of the vertical blade rotor, and also located in front of the windward surface of the rotor to shield off the windward side of the said rotor, making the side of the vertical rotor of the wind turbine receiving the incoming wind stream A and having the rotation hindered to be shielded. A drive mechanism is connected on the connecting structure between one of the two knightheads and the center pylon 409 (ie., the fixing frame) to drive the said knighthead to rotate around the center pylon, thus, further driving the said booster airfoil to rotate in order to change the positional relation between the said booster airfoil and the rotor, accommodating for the changes of the wind direction.

As shown in Figs. 11 and 12, the said knighthead may include two sections, of which the section near the said booster airfoil is a single knighthead section while the other end is connected with the said booster airfoil via the aforesaid main connector, and the other section is a double-knighthead section comprising two secondary knightheads, for example, secondary knightheads 413 and 414 in the knighthead fixed at the upper end of the booster airfoil as well as the secondary knightheads (identical to the secondary knightheads at the upper end) in the knighthead fixed at the lower end of the booster airfoil, and one end of these two secondary knightheads may also be fixed with the outer ring of bearing 411 through the aforesaid structure, and the secondary knightheads 413 and 414 may be fixed with the outer ring of bearing 411 through knighthead connector 415, while the lower secondary knightheads are fixed with the outer ring of bearing 411 through the knighthead connector, that is, two holes are made at relevant positions on the side wall of the knighthead connector, into which the ends of two secondary knightheads of one knighthead are inserted and fixed, in this manner, it is revolveably connected with the said center pylon; a T-joint connector 412 is provided between the said single-knighthead section and the two secondary knightheads, and three connecting pieces are provided on this T-joint connector, which are distributed in Y-shape, one connecting piece on one side connects with the other end of the said single-knighthead section, and the other two connecting pieces on the other side of the T-joint connector are respectively connected with the other ends of the said two secondary knightheads.

The aforesaid knighthead comprising two secondary knightheads may decompose the gravity force supported by them and the resistance received by them, such structure has a higher strength and rigidity over the knighthead comprising single-knighthead. Under the same gravity force and resistance, the knightheads of such structure can be made more slender, thus, the resistance of the rotor can be further reduced.

As shown in Fig. 11, the outer ring of the bearing connected by the upper knighthead may be connected with a drive unit 410 for driving the outer ring of the said bearing for rotation. The said drive unit is provided and fixed inside the hollow center pylon, which can be a motor whose output axis is connected with the outer ring of the bearing. The electric energy input of the motor can be connected with a power grid. It may also be connected with the storage mechanism provided on the present wind turbine, which can obtain electricity from the wind turbo-generator, it may also be a power generation unit provided between the rotor of the rotor type booster airfoil and the rotor axis, where the rotor can also be used as a power generator while being used as a booster airfoil for shielding relevant blades, and the electric energy generated is stored in the storage mechanism and later used for driving the revolving mechanism of the booster airfoil.

The said supporting device may also comprise a diagonal drawbar 407, one end of which is provided a connecting structure that is fixed with the upper end of the said booster airfoil while the other end is provided with a revolveable connecting structure that is revolveably connected with the said center pylon, and the position of the connecting structure for connecting the said diagonal drawbar and the said center pylon is higher than the said connecting structure for connecting the knighthead connected at the upper end of the booster airfoil and the said center pylon.

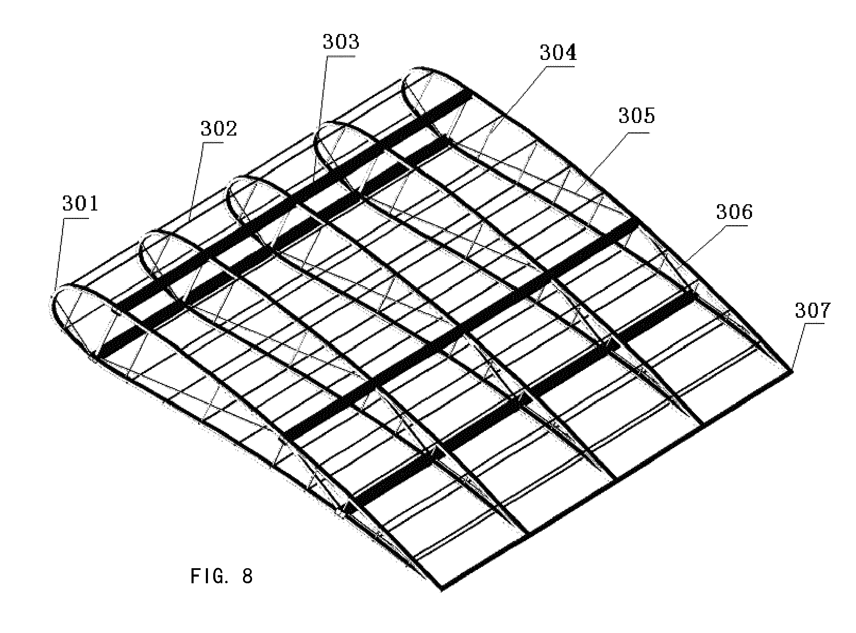

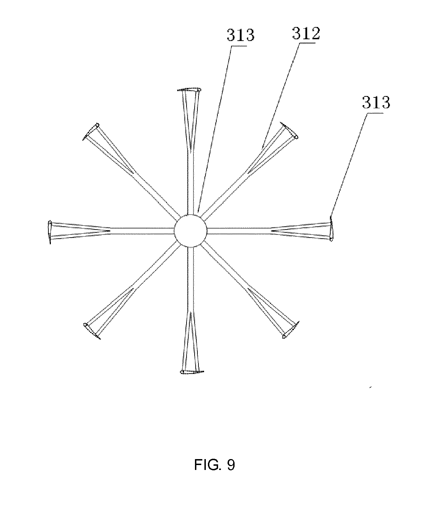

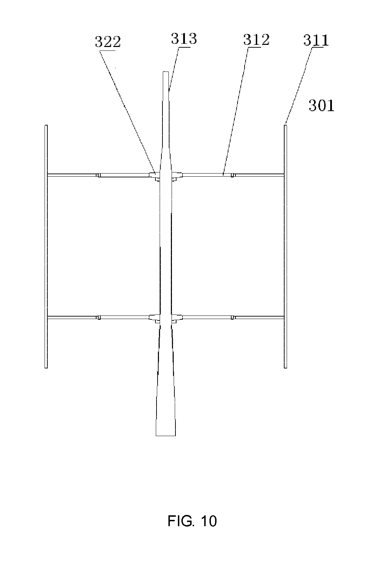

The rotor blades of the present wind turbine are as shown in Figs. 8, 9 and 10, and as shown in Fig. 1, the blade of rotor of the vertical axis wind turbine provided by the present invention comprises a skeleton for retaining the blade form and the skin fixed on the outside of the skeleton (not shown in the figure), this blade is of a vertical cylindrical body shape, whose horizontal cross-section is of the section form of an airplane wing, that is, with reference to axis 313 of the rotor (please refer to Figs. 9 and 10), the outward outer surface of blade 311 is of a streamlined cambered surface, and a smooth transition is formed between the said outer side surface and the inner side surface to form a relatively big windward end, ie., the head end and the smaller tail end of the blade.

With reference to the vertical axis of the said rotor axis 313, the distance between the outer side surface of the cylindrical body and the inner side surface is basically reducing gradually from the said head end to the tail end; and the various said horizontal cross-sections in the vertical direction of the blade have the same size and form.

As shown in Fig. 6, with reference to the vertical axis of the revolution axis 313 of the rotor, the said streamlined outer side surface of blade 311 is provided along the circumference of a circle with a set radius, and here the so-called circle of a set radius refers to the radius of the rotor, which can be set according to the designed power generation capacity of the wind turbine, the strength and rigidity of the structural elements, etc. This blade is connected with the hub of the said rotor by knighthead 312;

The said blade may be installed in the rotor in the following manner: with reference to the vertical axis of the revolution axis of the said rotor, the streamlined outer side surface of the said blade is placed at a set angle with the tangential direction of the circumference of a circle with a set radius, for example, placed along an helical line. The blade and the hub of the said rotor are also connected by using knightheads.

Such blade is placed at or near the outer rim of the rotor, and the connection between the blade and the rotor hub or the rotating component of the wind turbine is realized by means of knighthead 312. Therefore, the blade is no longer slender, and a big distance between the rotor hub and the outer rim may be the knighthead used for connection of the blade, while the rotating part on the rotor for receiving wind force is only the vertical cylindrical blade of the outer rim. In the case of such blade, since its outer side surface is of airplane wing type, the passing air streams can be made good use of by the blades, thus, the rotating efficiency is very high. The knighthead connecting the blade and the rotor hub can be made into a form and structure with very high strength and rigidity but very small wind resistance, for example, the cross-section of the knighthead may be elliptical cross-section. In this manner, the problem of the existing rotor blade with a poor wind resistance and a lower power and efficiency can be fundamentally reversed.

The blade provided by the present invention needs to withstand a fairly high wind force and its rotating resistance should be small, in other words, its deadweight should be light but should have sufficient strength and rigidity. Therefore, the skeleton of the blade may be designed as follows:

As shown in Fig. 8, the said skeleton comprises blade skeleton 301, skeleton main rib 303, skeleton auxiliary ribs 302, 307 and leaf-shaped knighthead;

There are a number of blade skeletons 301, which are the frames with its horizontal cross-section reassembling an airplane wing to form the cylindrical object of blade, and are subject to aligned arrangement at a set distance in the vertical direction of the blade;

Skeleton main rib 303 and auxiliary ribs 302 and 307 are a number of vertically arranged lever elements, for example, straight levers, and each skeleton reinforcement 303 and auxiliary ribs 302 and 307 of the said blade are placed around the said frame of blade skeleton 301, and each of the skeleton main rib and auxiliary ribs has a intersecting and fixing point with the said frames of all of the said blade skeletons, and the various skeleton main rib and auxiliary ribs placed around the blade skeleton 301 are fixed at a set distance to form the skeleton side wall support (the said skin) of blade 311;

The leaf-shaped knighthead support is provided between the sides opposite the frame formed by blade skeleton 301, for example, the leaf-shaped knighthead is placed in the plane where the frame is situated, with its both ends fixed with blade skeleton 301, in other words, the two ends of the leaf-shaped knighthead are respectively fixed on the frame of the said outer side surface and inner side surface opposite the blade corresponding with the blade skeleton, in order to keep the form of the frame of the blade skeleton from changing.

The leaf-shaped knighthead may include two types, the one type being a leaf-shaped knighthead 304 comprising a number of straight levers provided between the frames formed by the said blade skeletons in a mutually parallel manner.

The said skeleton main rib 303 and auxiliary rib 302 are fixed with the said leaf-shaped knighthead 4 provided on the said blade skeleton 301 at their intersecting points.

The other type is diagonal drawbar 306, one end of which is fixed at one end of a leaf-shaped knighthead 304 on the said outer side surface while the other end is fixed at one end of another leaf-shaped knighthead 304 on the said inner side surface; and further, the drawbar may also be fixed at the intersecting point between the said skeleton main rib 303 and the leaf knighthead 304.

The said skeleton main rib is a lever element with a high strength and/or rigidity and the said skeleton auxiliary rib is a lever element with a relatively lower strength and/or rigidity.

The preferred skeleton main rib distribution scheme is as follows: Of the four skeleton main ribs 303, two are provided on one side of the outer side surfaced of the blade while the other two provided on one side of the inner side surface of the blade, when looking at the horizontal cross-section of the blade, the four skeleton main ribs 303 form a rectangle, which are placed around the vertically provided lower mass center of the said blade and in such a manner that the mass of the said blade is balanced by the four skeleton main ribs.

Skeleton main rib 301 and auxiliary rib may be fabricated by using the same lightweight aluminum profiles, or may be made of different materials, the skeleton main rib is a hollow lever body with a cross-section bigger than that of the skeleton auxiliary rib.

To improve the rigidity and strength of the skeleton main rib, a partitioning wall may be provided in the longitudinal hollow cavity of the lever of the skeleton main rib to divide a large cavity into two smaller cavities.

The said blade skeleton may also be a hollow lever body, whose longitudinal cavity is divided into two longitudinal cavities by a longitudinal partitioning wall.

With the longitudinal cavity of hollow lever body being separated through partitioning wall, such lever structure may effectively reduce the weight of blade while improving its strength and rigidity.

Aluminum profile is the preferred material for fabricating the said blade skeleton, skeleton main rib, skeleton auxiliary rib and leaf-shaped knighthead. The various lever elements inside the skeleton are welded or cemented, and the cementing compound used may be amphoteric adhesive.

Such skeleton main rib and blade skeleton structures may well ensure the rigidity and strength of the blade while the weight of blade is very light. This enables the rotor composed of such blades to start at a very small wind force, and such wind turbine can generate electric power at a very small wind force. Tests have proven that rotor composed of such blades can rotate and generate electric power at a wind of Beaufort force 2. On the other hand, the aforementioned structure of the skeleton may also ensure a very high strength and rigidity of the blades themselves, which can withstand a wind up to 50m/s in force, and can work properly at a wind force of 35m/s or near a wind force of typhoon. Therefore, the wind turbine installed with the rotor blades provided by the present invention can be used for continuous safe power generation under a circumstance of high wind when conventional wind turbines have to stop operation. This is of great importance for the wind turbines to supply electric power to a power grid. In addition, the blades of this rotor are completely different from the problematic blade forms in the prior art, and are not easily subject to deformation and breakdown in addition to long service life, thus, if the present rotors are used in a wind farm, the chances of shutdown due to weather or failure will be very few, and the power grid can obtain the wind energy turned electric power persistently and steadily. This provides a reliable assurance for the vigorous development of wind power generation, and is of great importance to the national economy and livelihood of the people, environmental protection and the sustainable economic development. Furthermore, the present blade also has such advantages as easy combination and fabrication, high profile accuracy, etc.

The above has been a detailed description of the high-efficiency and high-power vertical axis wind turbine provided by the present invention. For the technical personnel from this field, any obvious change to it without getting rid of the substantial spirit of the present invention will constitute an infringement of the patent right of the present invention and corresponding legal liability shall apply.

### Industrial applicability

The high-efficiency and high-power vertical axis wind turbine of the present invention is applied in the field of industrial power generation.

## Claims

1. A high-efficiency and high-power vertical axis wind turbine, wherein, comprising a rotor that can be revolveably fixed on a center pylon, and a number of blades are provided on the said rotor, a power generation unit is provided between the said rotor and the pylon, and the stator assembly of the generator is placed on the pylon in a circular manner while the rotor assembly is placed on the outer circumference of the said stator assembly and is fixed with the rotor hub;
Also included is a booster airfoil which is a wind shielding object and is placed on a support without blocking the rotation of the said blades, and in the front of the windward side of the said wind rotor, the wind shielding surface of the said booster airfoil corresponds with the windward blades of the said wind rotor on the side where rotation is hindered by the incoming wind streams, so that the side where rotation of the rotor is hindered by the incoming wind streams is shielded, and the said support is placed on a fixed frame.

2. The high-efficiency and high-power vertical axis wind turbine of Claim 1, wherein the said booster airfoil is a plate type booster airfoil comprising a plate element fixed on the said support, and the side surface of this plate element corresponds with the windward side of the rotor of the said wind turbine to form the said wind shielding surface; or,
The said booster airfoil is a wind rotor type booster airfoil comprising at least one rotor which is revolveably connected on a wind rotor axis, the said wind rotor axis is fixed on the said support, and the cylindrical locus resulted from the outermost rotation of the blades on the rotor of the said booster airfoil forms the said wind shielding surface.

3. The high-efficiency and high-power vertical axis wind turbine of Claim 1, wherein the wind rotor of the said vertical axis wind turbine is a rotor with vertical blades, where the blades are connected onto the hub in the wind rotor by using two or more knightheads, and at least one of the said hubs is connected with the rotor of the wind turbine while the other hubs are revolveably connected with the said center pylon; this blade is a vertical cylindrical object whose horizontal cross-section is of the section form of an airplane wing, ie., with respect to the rotor revolution axis, its outer side surface o and the windward end face form a smooth transitional streamline cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.

4. The high-efficiency and high-power vertical axis wind turbine of Claim 2, wherein the rotor of the said booster airfoil is a vertical blade rotor, where the blades are connected onto the hub inside the rotor via knighthead, and the said hub can be revolveably fixed on the revolution axis of the said rotor installed in parallel with the said pylon, and the blade takes the form of a vertical cylindrical object, whose horizontal cross-section is of the section form of an airplane wing, ie., with respect to the rotor revolution axis, its outer side surface o and the windward end face form a smooth transitional streamline cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction; or
Rotor of the said booster airfoil may also be a propeller type rotor.

5. The high-efficiency and high-power vertical axis wind turbine of Claim 2 or Claim 4, wherein the said rotor type booster airfoil may have one rotor; or several rotors, all of which are provided on the revolution axis of the said wind rotor.; or,
A power generator set is provided between the rotor of the said booster airfoil and the said rotor axis, with the said rotor to be connected with the rotor of the said generator set to form a complete wind power generator set.

6. The high-efficiency and high-power vertical axis wind turbine of Claim 5, wherein if the said booster airfoil has one rotor, the height of the blade on the said rotor is identical to the height of the said blade on the rotor of the said wind turbine; or when there are several of the said rotors, the sum of the height of the blades on the various rotors and the gap in the vertical direction between the neighboring rotor blades equals to the height of the said blades on the rotors of the said wind turbine.

7. The high-efficiency and high-power vertical axis wind turbine of Claim 1 or Claim 2 or Claim 4, wherein, the side of the said booster airfoil away from the said center pylon should at least correspond with the outermost side of the windward side of the said rotor in the said vertical axis wind turbine where wind stream is received by the rotor and its rotation is hindered. ,

8. The high-efficiency and high-power vertical axis wind turbine of Claim 1 or Claim 2 or Claim 4, wherein, the said wind shielding surface of the said booster airfoil is a flat surface or cambered surface or a combination of flat surface and cambered surface in form; and/or,
The edge of the outermost side of the said wind shielding surface of the said booster airfoil away from the center pylon of the said rotor provided in the said vertical axis wind turbine should at least correspond with the outermost side of the said side surface of the windward side of the rotor in the said vertical axis wind turbine; and/or,
Width of the said wind shielding surface of the booster airfoil is 1/3 or 1/2 of the entire windward side surface of the rotor in the said wind turbine; and/or,
The edge of the said wind shielding surface of the said booster airfoil near the side of the center pylon of the said rotor provided in the said vertical axis wind turbine is on the corresponding windward side after turning 180 degrees to 330 degrees in clockwise direction starting from the center point of the said windward side surface and with the said center pylon at the center; and/or,
The said wind shielding surface of the said booster airfoil is a cambered surface and the two ends of the cambered surface are as follows:
To correspond with the depression angle of the motor in the said vertical axis wind turbine, the two ends of the wind shielding surface of the said booster airfoil is placed in the second quadrant with the center of the said rotor as the origin of coordinate or within the range extending from the second quadrant to the third quadrant.

9. The high-efficiency and high-power vertical axis wind turbine of Claim 1 or Claim 2 or Claim 4, wherein, the said support includes two knightheads, and one end of the two knightheads is respectively connected with the upper and lower ends of the said booster airfoil while the other end of the knighthead is connected on the said center pylon, and these two knightheads are respectively located above and below the said rotor of the said wind turbine, and their lengths are so designed that the said booster airfoil is located outside the rotating peripheral locus of the said rotor blade; or,
The said support may be paced on a foundation near the rotor of the said vertical axis wind turbine, keeping the said booster airfoil away from the rotating peripheral locus of the said rotor blade.

10. The high-efficiency and high-power vertical axis wind turbine of Claim 9, wherein, the said knighthead may be revolveably and orientably fixed on the said center pylon; or,
Track may be placed on the said foundation, and the said support is movably placed on the track.

11. The high-efficiency and high-power vertical axis wind turbine of Claim 1 or Claim 9, wherein, a booster airfoil displacement mechanism is also included which comprises a drive unit, and the said drive unit is placed on the said fixed frame that is connected with the said support, enabling the support to displace and further enabling the wind shielding surface of the said booster airfoil placed on it to block the different sides of the said rotor.

12. The high-efficiency and high-power vertical axis wind turbine of Claim 1 or Claim 3, wherein, a blade in the rotor of the said wind turbine includes a skeleton forming the shape of the blade as well as a skin fixed on the outside the said skeleton, and the said skeleton comprises blade skeletons, skeleton reinforcements and leaf-shaped knightheads;
There are several blade skeletons, which are frames in a horizontal section form of an airplane wing for the cylindrical objects of the blades, and are in aligned arrangement at a set spacing in the direction perpendicular with the blades;
The said skeleton reinforcement comprises a number of straight lever elements, and each skeleton reinforcement wraps around a number of the said blade skeleton frames in aligned arrangement, and each of the said skeleton reinforcement has an intersecting point of fixation with the frame of all blade skeletons in a vertical direction, which form a side wall skeleton of the blades to support and/or fix the said skin;
Two ends of the said leaf-shaped knighthead are supported and fixed on the lever body on the frame formed by the said blade skeleton in an opposite position so as to support and retain the shape of the frame.

13. The high-efficiency and high-power vertical axis wind turbine of Claim 12, wherein, the said skeleton reinforcement comprises four skeleton main ribs and a number of skeleton auxiliary ribs, and the said skeleton main ribs are distributed in such a manner: two of the said skeleton main ribs are placed on the side of the outer side surface of the corresponding blade while the other two skeleton main ribs are placed on the side of the inner side surface of the corresponding blade, the said four skeleton main ribs from a rectangle in the horizontal cross-section of the said blade, and are placed around the vertically provided lower mass center of the said blade and in such a manner that the mass of the said blade is balanced by the four skeleton main ribs.

14. The high-efficiency and high-power vertical axis wind turbine of Claim 13, wherein, the said skeleton main ribs are lever elements with a high strength and/or rigidity while the said skeleton auxiliary ribs are lever elements with a relatively low strength and/or rigidity; and/or,
The connecting points between the said skeleton main ribs and auxiliary ribs and the said blade skeleton intersect with and are fixed at the intersecting points between the said leaf-shaped knighthead and the said blade skeleton;
The connecting points between the said skeleton main ribs and auxiliary ribs and the said blade skeleton intersect with the connecting points between the leaf-shaped knighthead and the said blade skeleton.

15. The high-efficiency and high-power vertical axis wind turbine of Claim 3, wherein, with reference to the vertical axis of the revolution axis of the said rotor, the streamlined outer side surface of the said blade is placed along the circumference of the circle with a set radius; or, with reference to the vertical axis of the revolution axis of the said rotor, the streamlined outer side surface of the said blade is placed along a direction at a set angle with the tangential direction of the periphery of a circle with a set radius.
